# EUROPEAN PATENT APPLICATION

(11) **EP 4 221 125 A1**
(43) Date of publication of application: **02.08.2023**
(21) Application number: 23166062.2
(22) Date of filing: 30.01.2018
(51) Int. Cl.: H04L 41/0895, G06F 9/455, H04L 12/28

(54) **CUSTOMER PREMISE EQUIPMENT AND A METHOD AND SYSTEM FOR VIRTUALIZED DEPLOYMENT THEREOF**

(62) Divisional of application: 18154230.9
(71) Applicant: Deutsche Telekom AG, 53113 Bonn (DE)
(72) Inventor: ZENGERLE, Sebastian, 64347 Griesheim (DE); SIVCHENKO, Dmitry, 64331 Weiterstadt (DE)
(74) Representative: Vossius & Partner Patentanwälte Rechtsanwälte mbB

(57) **Abstract**

A method for virtualized deployment of customer premise equipment with a system comprising at least one customer premise equipment, CPE, unit and at least one distribution platform connected to the CPE unit via at least one network connection, the method comprising the steps of: providing an interface to a user for selecting at least one container to be instantiated on at least one of the CPE units; sending the at least one selected container to the respective CPE unit from a container registry of the distribution platform; receiving in an abstraction layer of the respective CPE unit the at least one selected container from the distribution platform; on-boarding the container according to information received from the distribution platform. Wherein the user is one of the following: a user of the CPE accessing the distribution platform via the CPE, a user of the CPE accessing the distribution platform via a device and/or connection independent of the CPE, and/or a third party accessing the distribution platform.

## Description

The invention relates to customer premise equipment and a method and system for virtualized deployment thereof.

Customer premise equipment, CPE, is an important component of a telecommunication network infrastructure. A CPE is typically the physical device which connects terminal equipment to the telecommunication network. Thus the CPE is usually physically located on the customer premise, i.e. a physical access is restricted to any third party in particular to a network operator.

The CPE has become an important part of the service chain for network based services. Different interfaces are supported by CPEs for different purposes. Typical communication hardware interfaces include optical, DSL, Wi-Fi, and/or LTE interface. Also in terms of software different applications and network functions are deployed on a typical CPE, preferably as firmware, to support, e.g. DHCP, NAT, and/or VoIP services.

In some networks the CPE may be owned by the customer in other networks the CPE may be owned by a service provider, or even by a third party. However, in most cases the possibility to change the functionality of the CPE according to changing demands on the CPE is restricted. For rapidly increasing and permanently adapting services offered by a typical network, such changes of the CPE functionality are frequently needed.

For instance, additional hardware and/or additional software functionalities on the CPE may be needed to support new home automation systems, to support new protocols for voice or video services, which are offered in the network, or to support new bonding mechanisms, e.g. to bundle resources of wired and wireless accesses, available in the network.

In the future additional hardware and/or additional software functionalities will be introduced more frequently and thus with an even more frequent adaptation of the CPE, it will become important to offer users all the variety of network based services and functionalities.

A modification of a CPE today is achieved by replacing of the CPE hardware or by updating the firmware installed on the CPE. For instance, in order to use hybrid access products which are offered today, special hybrid access CPE hardware and software is needed. This hybrid access CPE has special LTE radio hardware and special hybrid access software on top of the hardware platform.

Another example for a modification of a CPE is the modification of the protocol stack used to provide voice service in the network, e.g. to support early media functionality, or to react in another way on the received response codes from the network in order to improve the efficiency and robustness of the service itself.

However, for a state of the art CPE a hardware update is not possible at all and firmware updates require a complete replacement of the firmware, which is cumbersome and in some cases not feasible. Furthermore, firmware updates may only be distributed and performed through partners, preferably the manufactures and/or distributor of the CPE and such support is usually only provided for a very limited time period. A typical support period is 1 year.

In this way, older CPE used in the network infrastructure cannot be updated anymore by the user and/or the network operator. Consequently, users with an old CPE cannot leverage on the permanently improved network functionality in regard neither to applications, e.g. new DNS implementations, or new SIP implementations for voice service, nor on the physical improvements, e.g. the usage of another frequency band for LTE access in hybrid CPE having both wired and wireless interface which may be available for customers at a later time.

Consequently the CPE device itself must be replaced or additional hardware devices must be installed in the home network of the user. Since most users do not perform an upgrade of the CPE, the variety of devices present in the network increases over time. However, a increasing variety of CPE devices used in home networks already negatively impacts the performance of the telecommunication network, in terms of throughput and/or responsivity of the network, e.g. the performance of the distributed coordination function of the IEEE 802.11 specification which aims at maximizing the throughput while preventing packet collisions.

In addition the users of state of the art CPE cannot experience the benefits of the permanent network improvement performed by network operators. Furthermore the use of additional devices for e.g. home automation systems is an additional problem to be solved.

One approach to solve the above problems is the introduction of a so-called virtual CPE. This approach is essentially implementing the CPE functionality in data centers located in the network rather than on the actual customer premise. However, only some applications can be moved from the CPE itself into the data centre in a virtual CPE functionality, other applications such as a SIP implementation used to provide voice service for the customer may not be moved.

The described approach of using virtualized CPEs running in a data center, which is typically located at a central office, offers the opportunity to use a common layer 2 switch as the only device on the customer premise. However, this approach also detains the development of all applications which needs functional building-blocks at the customer premise.

Furthermore, physical interfaces installed on the CPE cannot be moved to a data center and also hybrid access approaches cannot be implemented with this technique. This is because hybrid approaches are using multiple physical data transfer paths available on the CPE. The decision logic which communication path has to be used for every data packet from CPE cannot be moved outside the CPE itself, e.g. into the data center.

Still further, all user data is exchanged between the CPE and network servers to provide dedicated network services via the data center which is implementing the virtual CPE functionality. That introduces an additional delay in the perception of the network services and negatively impacts the quality of used network services. For example an additional delay for storage applications, may be experienced by the customer.

It is an objective of the invention to provide an improved CPE. The improved CPE should overcome at least one of the aforementioned problems. In particular it is an objective of the invention to provide a customer premise equipment and a method and system for virtualized deployment thereof, preferably running on the hardware located in the premises of the customer itself.

The above objectives are among those achieved with the features of the subject-matter of the independent claims. The dependent claims relate to further aspects of the invention.

According to the invention a customer premise equipment (CPE) unit is provided which comprises: a physical resources layer comprising reprogrammable hardware recourses; an abstraction layer comprising a container environment configured to host at least one container, said container comprising at least one CPE application in an virtualized environment, wherein the abstraction layer is configured to allocate for the at least one CPE application a respective defined subset of physical resources from the physical resources layer; and an application layer formed by the at least one CPE application configured for at least one of the following: sending data to the physical resources layer via the abstraction layer, receiving data from the physical resources layer via the application layer, and/or after receiving and/or before sending of data to processing the data according to a predetermined CPE function.

According to an aspect of the invention the physical resources layer comprises at least one of the following units: at least one software-defined-radio unit configured to provide dynamic radio resources for at least one predetermined frequency range, at least one programmable logic device unit, preferably a field-programmable gate array, and at least one computational unit; wherein the units of the physical resources layer are preferably formed from general purpose hardware.

According to an aspect of the invention the software-defined-radio unit comprises at least one configurable RF unit, wherein each configurable RF unit is configured to provide and/or receive raw sampled data to/from the abstraction and/or application layer, which is preferably independent of the used modulation protocols; and wherein at least one CPE application is configured to implement at least one radio service which provides, receives, and/or processes the raw sampled data according to at least one first protocol.

According to an aspect of the invention the at least one first protocol can be reprogrammed for implementing any new protocols and preferably is at least one of the following: 802.11 family, e.g. a/b/g/n/ac/ad; GSM; WCDMA/UMTS; LTE, including LTE-Advanced; new developed 5G specifications; IoT protocols, e.g. NB-IoT, LoRaWAN; WPAN, BLE /bluetooth classic, ZigBee.

According to an aspect of the invention the at least one software-defined-radio unit is configured to operate on a wide range of different bands, preferably on at least of one of the following frequency ranges: the 433MHz frequency band, Gigabit-WiFi bands, 5G network band, DECT bands, ISM Bands at least, and bands reserved for cellular networks, in particular the 2.4GHz ISM, 5GHz ISM, 60GHz ISM bands and the bands of LTE specification (3GPP TS 36.101, and/or on an unlicensed frequency spectrum.

According to an aspect of the invention the software-defined-radio unit communicates directly with the at least one programmable logic device unit and/or an other programmable logic device for processing of the raw sampled data.

According to an aspect of the invention the at least one programmable logic device unit is configured to provide an interface to an optical network and/or to a wired network; and/or wherein at least one CPE application is configured to implement at least one communication service which provides, receives, and/or processes data from the programmable logic device unit according to at least one second protocol; and wherein the at least one second protocol can be reprogrammed for implementing any new protocols and is preferably a DSL or OTN protocol.

According to an aspect of the invention the containers are configured to be exchangeable; and/or wherein the container environment is configured to on-board or de-board containers.

According to an aspect of the invention the at least one CPE application provides at least one of CPE functionalities according to Layer 7 of the Open Systems Interconnect Model. Preferably provides one of the following CPE functionalities LTE eNB, Home eNB, UMTS NB, GSM BSS, WiFi/802.11 (a/b/g/n/ac/ad), NB-IoT, LoRaWAN, Legacy ISM-Gateway (433-MHz proprietary ISM devices) Router, NAT, PAT, Firewall, DHCP, GUI, Storage, Content Distribution Network (CDN), Speech Assistant, FXO (connecting POTS phone to the device), Smart-Home (e.g. temperature control, window control), FM Radio Receiver/Transmitter, Set-Top box, DSL Access, FTTH Access, and LTE Access.

According to the invention a method for operating a CPE unit according to any one of aforementioned aspects of the invention is provided which comprises the steps of: configuring the physical resources layer; hosting at least one container in the container environment; allocating for the at least one CPE application a respective defined subset of physical resources from the physical resources layer; and the application layer performing at least one of the following: sending data to the physical resources layer via the abstraction layer, receiving data from the physical resources layer via the application layer, and/or after receiving and/or before sending of data processing the data according to a predetermined CPE function.

According to the invention a system for virtualized deployment of customer premise equipment is provided which comprises at least one CPE unit according to any one of the aforementioned aspects of the invention and at least one distribution platform, preferably an store, such as e.g. the AppStore, Google Play, or Microsoft Store, connected to the CPE unit via at least one network connection, wherein the distribution platform is configured to host a container registry, and wherein the CPE unit is configured to communicate with the distribution platform and to on-board and/or de-board of least one container according to information received from the distribution platform.

The distribution platform and/or store may preferably operated by a network operator or and/or network provider.

According to an aspect of the invention the distribution platform is configured to provide an interface to a user for selecting at least one container to be instantiated on at least one of the CPE units; wherein the distribution platform is configured send the at least one selected container to the respective CPE unit from the container registry; wherein the abstraction layer of the respective CPE unit is configured to receive the at least one selected container from the distribution platform and to on-board the container according to the information received from the distribution platform; and wherein the user is one of the following: a user of the CPE accessing the distribution platform via the CPE, a user of the CPE accessing the distribution platform via a device and/or connection independent of the CPE, and/or a third party accessing the distribution platform.

According to an aspect of the invention a method of virtualized deployment of customer premise equipment is provided which comprises the steps of: providing an interface to a user for selecting at least one container to be instantiated on at least one of the CPE units; sending the at least one selected container to the respective CPE unit from the container registry; receiving in the abstraction layer of the respective CPE unit the at least one selected container from the distribution platform; on-boarding the container according to the information received from the distribution platform; and wherein the user is one of the following: a user of the CPE accessing the distribution platform via the CPE, a user of the CPE accessing the distribution platform via a device and/or connection independent of the CPE, and/or a third party accessing the distribution platform.

According to the invention the method of virtualized deployment of customer premise equipment additionally comprises in at least one CPE unit the steps of: configuring the physical resources layer; hosting at least one container in the container environment; allocating for the at least one CPE application a respective defined subset of physical resources from the physical resources layer; and the application layer performing at least of the following: sending data to the physical resources layer via the abstraction layer, receiving data from the physical resources layer via the application layer, and/or after receiving and/or before sending of data processing the data according to a predetermined CPE function.

It is one aspect of the invention to provide a virtual CPE running on a generic hardware platform located at the premises of the customer and to perform an virtual implementation of the CPE functionality as well as an implementation of the interfaces.

Thus a flexible adaptation of the CPE allows for changes performed in the network and for introducing new services and new interface standards/features to adapt the general functionality of the CPE hardware. The CPE according to the invention preferably runs on commercial off-the-shelf, COTS, hardware, based on a commonly used architecture like x86 or ARM instead of a single Systems-On-Chip with embedded firmware and functionalities like Wi-Fi as used in the state of the art.

The CPE according to the invention comprises a Software-Defined-Radio unit, SDR unit, which provides dynamic radio resources for leveraging the virtualization of applications with the need of radio functions, e.g. an LTE stack or multiple stacks for home automation.

The CPE according to the invention further comprises at least one field programmable gate array FPGA to provide the interface for access to the internet service provider, ISP, in a dynamic way, connecting either via an optical or a copper-based network.

Furthermore, in the CPE according to the invention on top of an operating system, each service runs in a container environment, which allows for independent on-boarding of new applications and functionalities.

Thus the virtualized approach allows for providing updates and/or new functionalities packaged in containers, which can be distributed and/or deployed in the virtualized CPE individually based on the choice of a user.

It is a further aspect of the invention to base the distribution of the containers on a container registry, which is part of a management and orchestration framework. Preferably, said container registry is integrated in a distribution platform which allows convenient selection and delivery of CPE services and functionality from the network to the CPE on the customers premise.

According to an aspect of the invention the CPE functionality stays located in the CPE itself, however it is virtualized. Thus optimal processing of data packets is possible. Furthermore, a wired and/or wireless connection to customer devices is possible. New services can be delivered virtually for every customer in an up-to-date fashion for both the application and the physical layer of the CPE. According to an aspect of the invention in the system the CPE can be integrated into a continuous integration and continuous delivery environment. This leverages updates in seconds from writing code, testing it and deploying the changes on all devices in the operator network and/or alternatively on selecting a sub-group of devices for said update, e.g. in a specific geographical region.

In addition to the network operator also partners and/or another third party may develop own applications and use the device as the platform for their respective use-cases. Thus the CPE becomes an open platform.

In other words, the invention allows for implementing a virtualized CPE that enables flexible adaptation of the virtualized CPE for changes performed in the network. Therefore according to the invention an independent hardware platform is provided. Said hardware platform provides a generic physical resource layer, preferably comprising different universal components such as an x86-computational unit, a software defined radio, SDR, or a programmable logic device, preferably a field programmable gating array, FPGA.

The resources of a physical resource layer are programmed due to a firmware in a generic way independent of the use case. A further software layer on top of the firmware provides the use case as a software application. This allows for adaptation of the functionalities of the hardware as well as the software of the virtualized CPE. Said adaptation might be necessary, e.g. for changes in home automation systems working for example in the 433MHz frequency band, for changes in a wireless sensor network and/or changes in an , internet-of-things, IoT network or a communication in other frequency spectrums.

The method according to an embodiment of the invention allows for implementing a virtualized CPE that will allow flexible use of applications on top of a generic hardware platform. The generic hardware platform is preferably independent of the different use-cases.

The physical resource layer provides a set of resources like compute resources, physical radio resources, memory, storage, and digital signal processing resources. In a preferred embodiment of the invention a x86 compute architecture is used. In a preferred embodiment of the invention software-defined-radio, SDR, technologies are used for providing radio resources. In a preferred embodiment of the invention one or more FPGAs are used for implementing signal processing functionalities.

According to the invention on top of the physical resource layer an abstraction layer is provided. The abstraction layer allocates for each application a defined subset of physical resources to the application. This abstraction layer is preferably based on a container technology like Linux containers, preferably LXC/Docker. Adaptations for different applications are preferably part of the software inside the respective container.

In contrast to the virtual CPE approach described in the state of the art, the method and system of the invention leverages the full customer-to-service, i.e. end-to-end, virtualization of the CPE. This is achieved by the use of virtualization technology inside the CPE. The virtualization driven platform enables to on-board services dynamically.

In other words, according to the invention a home gateway becomes a micro data center installed at the customer premise and the CPE functionality is dynamically loaded in this micro data center and adapted according to the needs of the customer.

According to the invention the provided services are not restricted to basic computation, storage, and network services, but may also comprise the use of dynamic radio- and access-technologies, e.g. Wi-Fi and optical access networks.

### Brief Description of the Figures

The above-described objects, advantages and features of the present invention, as well as others, will be more readily understood from the following detailed description of certain preferred embodiments of the invention, when considered in conjunction with the accompanying drawings in which:
Fig. 1 shows a CPE system according to the state of the art,
Fig. 2 shows a CPE system according to an embodiment of the invention,
Fig. 3 shows a block diagram of a CPE system according to the state of the art,
Fig. 4 shows a block diagram of a CPE system according to an embodiment of the invention,
Fig. 5 shows a block diagram of a SDR unit of a CPE system according to an embodiment of the invention,
Fig. 6 shows a block diagram of a management and orchestration framework of a CPE system according to an embodiment of the invention,
Fig. 7 shows a block diagram of an abstraction layer of a CPE system according to an embodiment of the invention,
Fig. 8 shows a block diagram of virtualized CPE system according to an embodiment of the invention operating as FM receiver,
Fig. 9 shows a block diagram of virtualized CPE system according to an embodiment of the invention operating as FM transmitter, and
Fig. 10 shows a block diagram of virtualized CPE system according to an embodiment of the invention implementing an eNB.

### Description of the Figures

The present invention is illustrated by way of example and not limited by the accompanying figures in which like numeral references refer to like elements, wherever possible.

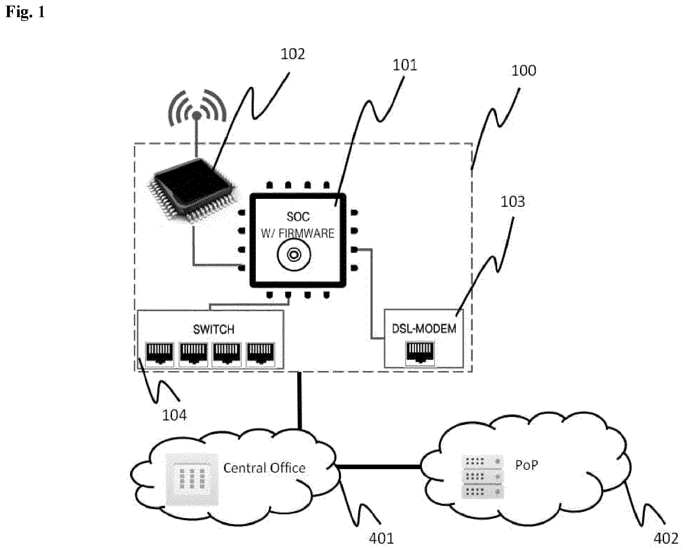

In Fig. 1 a CPE system according to the state of the art is shown. The CPE 100 comprises a single Systems-On-Chip SOC with embedded firmware 101 connected to a WiFi unit 102, a DSL modem 103, and a switching unit 104. The switching unit 104 is connected to a central office 401 which is connected to a backbone network 402, or equivalent devices in a wide area network.

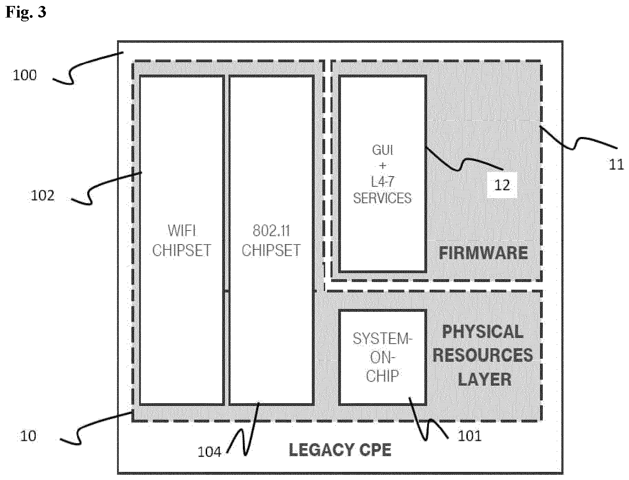

In Fig. 3 a block diagram of a CPE system (Legacy CPE) according to the state of the art is shown. The CPE 100 includes a physical resources layer 10 and a firmware layer 11. The physical resources layer includes the SOC chip 101, an 802.11 chipset 104, and a WiFi-chipset 102. In the shown implementation lower layer protocols are vertically integrated together with physical circuits, e.g. RF circuits, in a single chip such as the DSL-Chipset or the WiFi-chipset 102. Furthermore, in said implementation higher layer protocols, such as IP, TCP, and/or UDP as well as other features like GUI are implemented as firmware 12 in the firmware layer 11.

The firmware 12 itself may be exchangeable. However, when the user wants adapt the CPE 100, e.g. to use a hybrid access, changes in the hardware are required, i.e. an additional LTE functionality is required. Said adaptations in the low-layer protocols are not possible with a state of the art CPE 100.

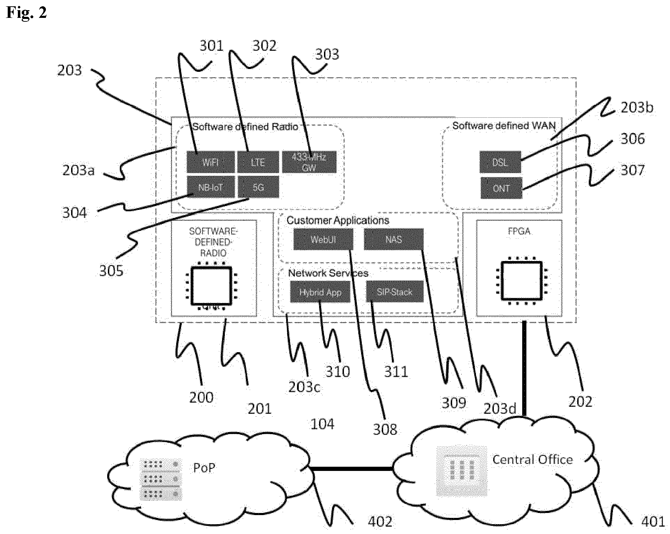

In Fig. 2 a CPE system according to an embodiment of the invention is shown. The CPE 200 comprises a software-defined-radio unit 201, a FPGA unit 202, and a plurality of software components 203. The software components comprise a software defined radio component 203a, a software defined Wide Area Network WAN component 203b, a network services component 203c, and a customer applications component 203d. The FPGA unit 202 is connected to a central office 401 which is connected to a backbone network 402, or equivalent devices in a wide area network.

In the CPE 200 according to the invention the functionalities are implemented in the software components 203. The software defined radio component 203a may comprise a WIFI application 301, a LTE application 302, a 433-MHz application 303, a Narrowband IoT application 304, and a 5G application 305. The software defined WAN component 203b may comprise a DSL application 306 and Optical Network Termination application 307. The network services application 203c may comprise a hybrid access application 310 and an session initiation protocol, SIP,-stack 311. The very concept of the invention allows for different applications to be run virtualized in a container environment on the CPE 200. The customer application component 203d may be any application and/or service which can be implemented on a computational unit, expect the aforementioned communication and network service applications and/or service. Preferably, the customer application component 203d comprises services and/or applications which require access to a home network at the customer premise and/or access to an outside network. However, for illustration purpose only, the customer applications components 203d are limited to a web based user interface, webUI, application 308 and a network attached storage, NAS, application 309.

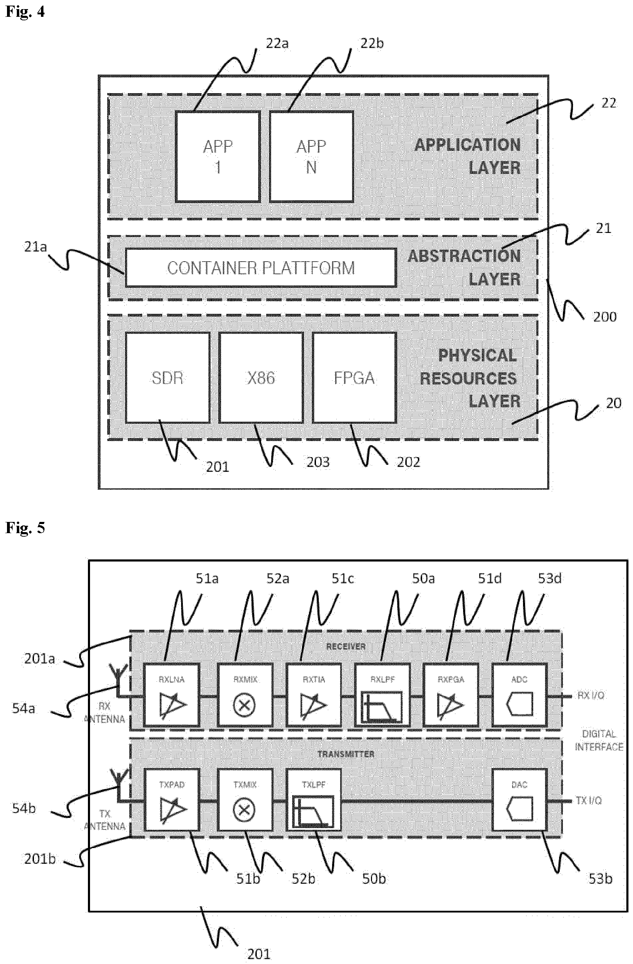

Fig. 4 shows a block diagram of a CPE system 200 according to an embodiment of the invention. In contrast to the block diagram in Fig. 3, the physical resources layer 20 of the CPE 200 according to the present invention comprises the SDR unit 201 configured to provide radio resources, the computation unit 203 configured to provide a computing platform for applications, and the at least one FPGA 202 configured to provide programmable digital-circuits for signal progressing. On top of the physical resources layer 20 an abstraction layer 21 is provided. The abstraction layer 21 comprises, among other, a container platform 21a and is configured to provide the ability to run at least one application 22-1 on shared hardware resources. On top of the abstraction layer 21 an application layer 22 is provided. Use-cases are delivered in 1 to N application packages 22-1 to 22-N and run in the application layer 22. The computation unit 203 is preferably based on an x86 architecture, however the skilled person is aware of further suitable architectures.

According to an aspect of the invention the CPE 200 is preferably build from commercial of the shelf COTS components. The COTS approach uses commercially available products for customized deployments of different network entities. The COTS term is not restricted to CPE hardware, but also to the CPE software.

For example, the industry standard operating system Linux is COTS software. According to the invention, building a customized application on top of COTS hardware and software brings a lot of advantages. One of the advantages is that COTS technology is usually much cheaper than non-COTS technology. In the present invention, the main idea is to utilize COTS hardware and software built for general purposes. The use of COTS software also facilitates the implementation of a more flexible on-boarding and de-boarding of different applications.

In an embodiment of the invention the SDR 201 and as well the FPGA 202 each has a respective firmware to provide access to the physical resource layer 20, preferably for digital signal processing. In a preferred embodiment of the invention this firmware is independent of the use-case application of the application layer 22 and the abstraction layer 21.

In one embodiment of the invention, on top of the hardware of the physical resources layer 20 a Linux-based operating system is run, which is configured to provide basic functionalities to the CPE 200, e.g. hardware abstraction, like I/O, CPU, memory, storage and network access. Inside the operating system a kernel provides the abstraction layer 21 to the physical resource layer 20. Higher layer software will program the FPGA 202 and as well set configuration in the SDR 201.

According to the invention all digital signal processing preferably is done by the kernel, if not offloaded to the FPGA 202, the latter may depend on the requirements, e.g. the required latency. Preferably in the operating system the Linux Container (LXC) technology is used in the abstraction layer 21 and the application layer 22, which runs multiple isolated container based Linux systems.

On top of the operating system, each service such as the software defined radio 203a, the software-defined WAN 203b, the network services 203c, and the customer application 203d runs in a separate or shared container environment. These containers are preferably provided by LXC/Docker. The container technology is configured to use Linux functionalities to isolate each container from other containers. For example Linux kernel features, such as control groups, cgroups, for processes and namespaces for network.

According to an embodiment of the invention each container has a union-capable file system which is configured to enable the use of a single file system root-image for multiple containers. The changes between the root image and the image of a certain container are stored in a separated union-layer.

The skilled person is aware of different container environments using a union- capable file system. It is the basic concept of implementing file systems for containers. Thus, the different implementations are possible without leaving the scope of the present invention.

According to an embodiment of the invention the root image is stored on the device in an exchangeable manner. To on-board a service will require only a delta-image by referring to the single root image. New services are on-boarded by requesting these union-images by Container Registries, such as the Docker Registry/Docker Hub.

In one embodiment of the on-boarding process a user opens a store on a web based GUI of the CPE and requests installation of an Application, preferably a CPE Service. The Application is then downloaded from a registry or another file source and installed on the CPE device. Preferably, corresponding configuration and metadata is also stored on the CPE device.

Additionally, or alternatively a user may use a customer portal, preferably on a website of a network operator or still preferably on a App on a mobile user device to request an installation of an Application on the CPE device. The install request is then pushed to the CPE unit, which initiates a installation process which is a similar or the same process as when the installation would have been be requested directly on the CPE GUI.

Fig. 5 shows a block diagram of a SDR unit 201 of a CPE system 200 according to an embodiment of the invention. The SDR unit comprises at least one receiver unit 201a and at least one transmitter unit 201b. The SDR unit 201 comprises at least one analog to digital converter 53a and at least one digital to analog converter 53b, each configured to sample analog signals to digital signals and vice versa and respectively. The SDR unit 201 further comprises at least one receiver mixer 52a and at least one transmitter mixer 52b configured to mix a baseband signal with a target frequency carrier and to move a signal to the target frequency. The SDR unit 201 further comprises at least one amplifier for different purposes 51a, 51b, 51c, 51d in different stages of the transmitter and receiver chain. The SDR unit 201 further comprises at least one low-pass filter 50a and 50b for different purposes in different stages of the chains, e.g. for avoiding aliasing. General purpose SDR units and their general functionality, e.g. the LMS7002M FPRF MIMO Transceiver IC with integrated microcontroller of Lime Microsystems, UK, or the USRP B210 board of Ettus Research, USA, can be used.

According to the invention the SDR unit 201 provides dynamic radio resources, which leverage the virtualization of applications with the need of radio functions. Also this hardware block is based on COTS hardware, to provide the needed flexibility.

In the state of the art CPE most of functions for radio communication are implemented in hardware. For instance, these functions are filters, modulator/demodulator, and mixers. Moreover, the control plane of the specific radio protocols are integrated in a single silicon co-located with the radio frequency devices.

In an SDR unit 201 according to an embodiment of the invention different radio protocols can be implemented on top of the COTS hardware by software in order to receive and transmit data packets over air, using appropriate protocols for radio transmission.

The configurable RF unit provides raw sampled data (I/Q data), which is independent of the used protocols, modulation, coding, MAC algorithms, and such. All the specific implementations are processed by software in containers on standard COTS hardware, preferably on x86 hardware.

According to the invention, for high performance applications, like Gigabit-WiFi, supporting devices such as FPGAs are used in the SDR unit 201; however, the use is not limited to SDR use-cases. If an SDR unit 201 is used as a part of the CPE 200, the radio functions can be provided on-demand in a dynamic way by the use of the described container solution for the software defined radio component 203a. Preferably, a set of parameters for the analog part is adapted on a per session basis, e.g. if LTE as an application is started parameters such as frequencies, bandwidth, and sampling rate may be configured.

Applications like WiFi, which may include Neighbor Meshing WiFi, can be provided if provisioned. If the user wants to use functions like Hybrid Internet Access an additional LTE stack can be dynamically loaded on the CPE 200.

In an embodiment of the invention the SDR unit 201 is configured to be useable for third party developed applications. One example is the use of the SDR unit 201 for Smart Home Applications. A respective vendor can develop smart home concentrators without the need to produce own hardware for the concentrators. Legacy communication devices like 433-Mhz, e.g. temperature sensors, can be used by programming the virtualized CPE to their frequency and protocol and thus be integrated for Smart-Home applications. The solution of the present invention is also open for forward-looking applications like 5G and supports also all legacy applications like DECT.

According to the invention the amount of channels per CPE 200 depends on the available RF units in the SDR unit 201, which are horizontally scalable by chaining multiple units. One option is to offer multiple models of the CPE 200 with different numbers of RF channels, according to customer's need.

According to the invention the SDR resources may be used efficiently by implementing radio-duty-cycling which can provide resource to multiple applications. In other words the time, which is not needed by the protocol, may be used for other applications in a time-division multiplexing scheme.

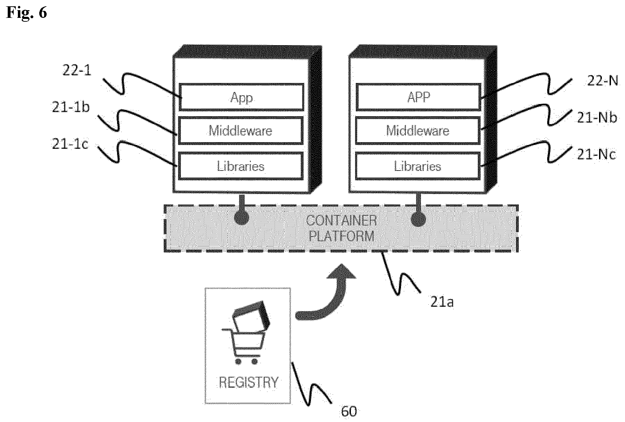

Fig. 6 shows a block diagram of a management and orchestration framework of a CPE system according to an embodiment of the invention. In particular the inner workings of the abstraction layer according to the invention are shown. A container according to the invention is configured to package software into standardized units and includes everything to run a application 22-1 to 22-N, i.e. middleware 21-Nb and libraries 21-Nc are included.

Each container is running independent of the environment and thus isolates the software from the surroundings. The container platform 21a is configured to provide a unified environment to run the containers and is responsible for abstraction of functionalities. A container registry 60 is configured to provides and/or manage images of containers, images of containers are preferably instantiated in the container registry.

According to an embodiment of the invention new services are packaged in the containers. The containers are uploaded to the container registry 60, which is part of the management and orchestration framework. In a preferred embodiment of the invention the management and orchestration framework is implemented as a distribution platform for the entire architecture. Therefore, in case a user wants to add a new functionality to the CPE 200, the user can instantiate the container on top of the CPE 200 platform by downloading the container image from the container registry 60 onto the CPE 200.

Additionally, or alternatively the provisioning of containers is triggered by the distribution platform located in the network. Thus, control of the necessary applications, which preferably includes application updates and changes, can be initiated by the network operator. In this way the network operator has the plurality of installed CPE under its own control and may therefore reduce the number of different CPEs in the network.

According to the invention, the exchangeable images for containers provide dynamic applications such as modifiable SIP-stacks for telephony applications and other customer applications.

Preferably the images for containers of the other customer applications are developed from a third party. In consequence the entire CPE 200 platform can be open to the market in order to enable other vendors to on-board their applications on the platform.

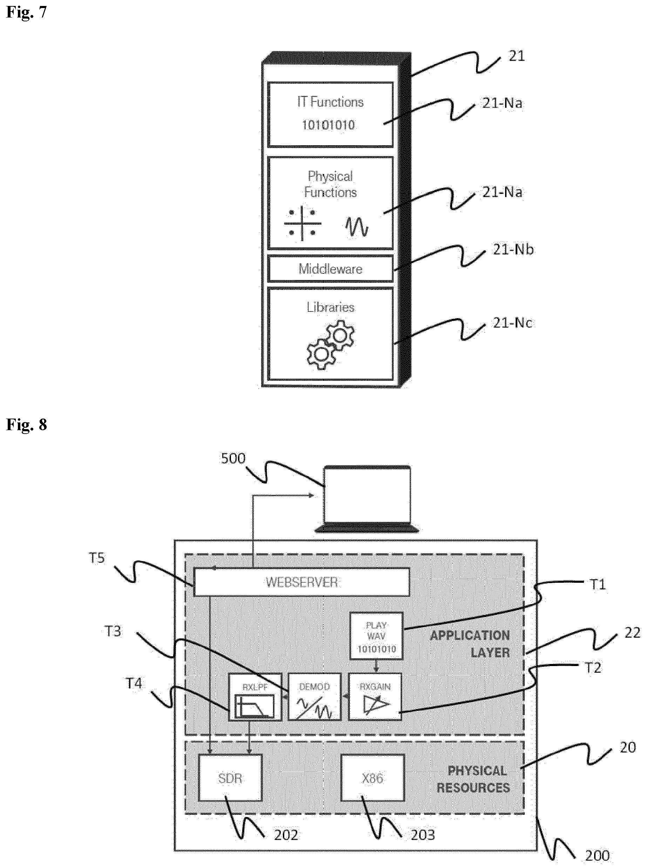

Fig. 7 shows a block diagram of an abstraction layer of a CPE system according to an embodiment of the invention. According to the invention all application or network protocol specific functions are encapsulated in application packages (containers) of the application layer. Furthermore, libraries 21-Nc provide the basic dependencies of a respective application and middleware 21-Nb provides additional software needed during the runtime of a respective application. Furthermore, some access to physical functions is provided. Preferred functions are modulation, coding, and filtering of signals. Lastly, IT functions are provided which preferably include higher level protocol behavior, Web-GUI, network services, and storage.

Fig. 8 shows a block diagram of virtualized CPE 200 system according to an embodiment of the invention operating as FM receiver. In this use-case in the physical resource layer 20 the SDR unit 201 and the computational unit 203 is used. The SDR unit 201 is tuned to a frequency in the FM frequency band and delivers digital baseband I/Q signal. In the application layer 22, a user operating a terminal device 500, preferably a laptop computer connected via a wireless connection to the CPE 200, browses to an graphical use-interface on a web server R5, which is running on the CPE. Via the graphical user interface of the web server R5 the SDR unit 201 can be configured. Preferably, a specific frequency for FM reception may be selected. Subsequently the selected FM reception frequency is programmed into the SDR unit 201. In addition or alternatively functions like an automated scan of the FM band may be performed, and frequency selection may be based on a selection of a specific station. After the SDR unit 201 has been set to the FM reception frequency the SDR unit 201 delivers a raw I/Q signal into the application layer. In a preferred embodiment the signal processing is done in software. The Signal processing preferably comprises low-pass filtering R1 for anti-aliasing, demodulation R2, and gain R3. The demodulated signal is then in step R4 streamed through the web server. Thus the FM signal may be received in the terminal device 500 via the web server. The skilled person may be aware of different modifications to the described embodiment. However, an aspect of this embodiment of the invention is to use a programmable SDR unit 201 of a CPE 200 as a FM receiver. Only the actual reception of the radio signal is performed in the physical resources layer 20 of the CPE. The signal processing, i.e. the implementation of an FM tuner, is then performed in the application layer 22 of the CPE 200. While direct streaming to a terminal device is possible, it is preferred to use a web server also running in the CPE 200 to provide a terminal device independent user interface for the FM receiver.

According to the invention the FM receiver application is packaged as a container and can be deployed in the virtualized CPE 200. Thus, the FM-receiver can be updated without changing the hardware or firmware of the CPE 200. In a preferred embodiment the FM container can be deployed via a container registry 60 and/or a corresponding distribution platform.

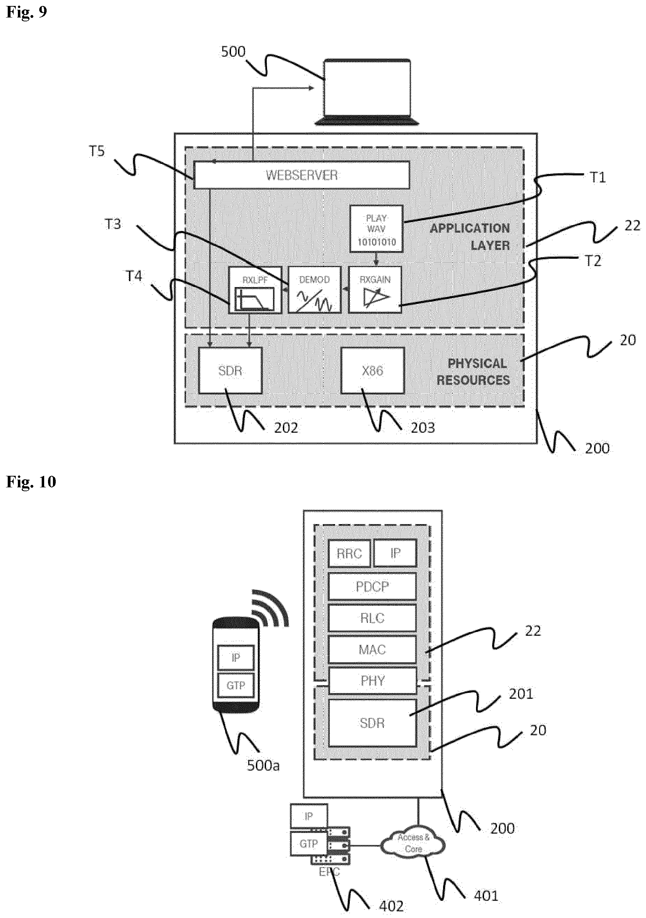

Fig. 9 shows a block diagram of virtualized CPE system according to an embodiment of the invention operating as FM transmitter following the same aspect as described for the embodiment of Fig. 8. However, instead of receiving an FM-signal the SDR unit 201 now transmits a signal. Again, only the transmission is performed in the physical resources layer 20 of the CPE 200 and all required signal processing is preformed in the application layer 22 of the CPE. In a preferred embodiment the SDR unit 201 is configured via a web server T5 running on the CPE 200. Configuring of the SDR unit 201 includes selecting of an FM frequency, selecting of transmission power, and further specification of the transmission. The signal to be transmitted is the processed in the transmission chain T1, T2, T3, and T4 which includes outputting of the signal T1, gain T2, Modulation T3 and filtering T4, before the signal in a final step is being transmitted by the SDR unit 201.

What has been described above for the FM frequency band can be implemented for reception and transmission of analog and/or digital radio signals in any frequency band within the physical frequency limitations of the SRD unit 201. In particular because the signal processing is performed in the application layer 20 the reception and transmission unit can be virtualized and packaged in containers.

According to an embodiment of the present invention, also the interface to provide access to the ISP is provided in a dynamic way, by the use of the programmable FPGAs 202. An exchangeable trans-receiver is configured to provide basic physical functions in the physical resources layer 20, preferably to provide laser transmission, reception, and sampling. The FPGA 202 may be configured similar to the SDR unit 201 as described above. The FPGA unit 202 may be configured to be responsible for all protocol specific implementations like a optical transporter networks data link OTN MAC layer such as OTN's Data Link Layers (OTS, OMS, OCU). However, the logical functions can be reprogrammed if needed in order to dynamically adopt the protocols used on the access side.

When considering the above embodiments in context of VDSL with and without vectoring technology, it is evident that the bottom half of the layer 1 is still the same, therein the mixing, filtering and sampling of the signal is done. Depending of the physical properties of the cable, a far-end crosstalk may occur. VDSL2 with vectoring is an approach to compensate the far-end-crosstalk on each site, by estimating the disturbed signal and move the complex I/Q samples against the estimation.

According to the invention this process is above the bottom half of layer 1 and is within responsibility of the FPGA 202, which can be reprogrammed and thus allows for dynamic changes. Therefore, in all embodiments of the invention changes in the behavior of the vectoring are feasible without the need for hardware changes at the customer's premise.

Based on the above-described basic use-case further more advanced use-cases are possible utilizing different aspects of the physical resources layer according to the invention.

Fig. 10 shows a block diagram of virtualized CPE system according to an embodiment of the invention implementing an evolved Node B (eNB). In this embodiment all resources of the physical resources layer 20 are employed. The CPE system 200 provides via the FPGA unit 202 a connection to a central office 401and the backbone network 402 as described in the above. The SDR unit 201 is employed to for wireless communication with a mobile handset 500a. Again, only the basic reception and transmission of the signal is performed in the physical resources layer 20 of the CPE 200. All signal processing, in particular the implementation of the different required communication protocols is realized in the application layer 22 of the CPE 200.

Thus, a home eNB is a use-case of the CPE unit according to the invention which uses the physical layer resources computing resources 203 for dynamic computing, the SDR unit 201 for the use radio resources and preferably the FPGA 201 to accelerate time critical aspects of the application. The application implements the 3GPP specified LTE Stack, information like MAC, PRACH, RLC, PDCP as defined in this standard. While in current eNB device the user has to by special hardware. In a CPE according to the invention the eNB functionality can be fully virtualized and is realized as an application on a universal platform and thus can be deployed and/or updated without physical access to the CPE.

In other embodiments of the invention hybrid access functionality is implemented in the application layer 22 of the CPE 200. In these embodiments the CPE is configured to be an LTE UE in the operator network, in other words to use a macro cell. The CPE 200 connects to a hybrid access aggregation point which is responsible for merging of least two data streams originated by the CPE which results in a higher data rate. The data streams are transmitted via a wired network using the FPGA unit 203 and/or a wireless network using the SDR unit 201.

In other embodiments of the invention smart home functionality is implemented in the application layer 22 of the CPE 200. In these embodiments the CPE 200 is configured to provide a small NB-IoT cell for smart home devices and services. Additionally or alternatively the CPE 200 is configured to connect to legacy devices which use different frequency bands such as ISM-Bands with proprietary modulation/coding and protocols. Said smart home legacy devices may include temperature sensors.

Some state of the art CPE include an SIP-Client which is a software on the CPE to establish an SIP session to a fixed telephone network. This SIP client may be based on different specification and/or standards issued, thus the behavior of the protocol is not clearly defined and different CPE may behave differently. In an other embodiment of the invention an exchangeable SIP-Stack is implemented in the application layer 22 of the CPE 200. In these embodiments the CPE 200 offers the advantage of an adaptable terminal behavior, i.e. the SIP-stack can be configured dynamically.

In some embodiments of the invention, a smart-home vendor may dynamically deliver software in form of images which are loaded on the CPE. Moreover, the applications co-located in the CPE, e.g. a NAS, Media Server, may be provided dynamically from different software suppliers.

The dedicated chipsets used for optical access technology, as well for copper-based access over DSL in the state of the art CPE 100, can be replaced with field programmable gate arrays FPGAs 202 in the CPE 200 according to the invention.

What has been described and illustrated herein are embodiments of the invention along with some of variations. The terms, descriptions and figures used herein are set forth by way of illustration only and are not meant as limitations. Those skilled in the art will recognize that many variations are possible within the spirit and scope of the invention, which is intended to be defined by the following claims-and their equivalents-in which all terms are meant in their broadest reasonable sense unless otherwise indicated.

The invention further relates to the following items:
item 1. A customer premise equipment (CPE) unit comprising:
   a physical resources layer comprising reprogrammable hardware resources;
   an abstraction layer, preferably comprising a container environment, configured to host at least one container, said container comprising at least one CPE application in an virtualized environment, wherein the abstraction layer is configured to allocate for the at least one CPE application a respective defined subset of physical resources from the physical resources layer; and
   an application layer formed by the at least one CPE application configured for at least one of the following: sending data to the physical resources layer via the abstraction layer, receiving data from the physical resources layer via the application layer, and/or after receiving and/or before sending of data to processing the data according to a predetermined CPE function.
item 2. The CPE unit according to item 1,
   wherein the physical resources layer comprises at least one of the following units:
   at least one software-defined-radio unit configured to provide dynamic radio resources for at least one predetermined frequency range,
   at least one programmable logic device unit, preferably a field-programmable gate array, and
   at least one computational unit;
   wherein the units of the physical resources layer are preferably formed from general purpose hardware.
item 3. The CPE unit according to item 2,
   wherein the software-defined-radio unit comprises at least one configurable RF unit, wherein each configurable RF unit is configured to provide and/or receive raw sampled data to/from the abstraction and/or application layer, which is preferably independent of the used modulation protocols; and
   wherein at least one CPE application is configured to implement at least one radio service which provides, receives, and/or processes the raw sampled data according to at least one first protocol.
item 4. The CPE unit according to item 3,
   wherein the at least one first protocol can be reprogrammed to implement a new protocol and is preferably at least one of the following: a protocol according to the IEEE 802.11 specification, a GSM protocol, a WCDMA/UMTS protocol, a LTE protocol, a 5G protocol, or a IoT protocol; and/or
   wherein the at least one software-defined-radio unit is configured to operate on a wide range of different bands, preferably on at least of one of the following frequency bands: the 433MHz frequency band, Gigabit-WiFi bands, 5G network band, DECT bands, bands reserved for cellular networks, ISM bands, bands of the LTE specification, and/or on an unlicensed frequency spectrum.
item 5. The CPE unit according to items 3 or 4,
   wherein the software-defined-radio unit communicates directly with the at least one programmable logic device unit and/or a other programmable logic device for processing of the raw sampled data.
item 6. The CPE unit according to any one of items 2 to 5,
   wherein the at least one programmable logic device unit is configured to provide an interface to an optical network and/or to a wired network; and/or
   wherein at least one CPE application is configured to implement at least one communication service which provides, receives, and/or processes data from the programmable logic device unit according to at least one second protocol; and
   wherein the at least one second protocol can be reprogrammed to implement a new protocol and is preferably a DSL or OTN protocol.
item 7. The CPE unit according to any one of items 1 to 6,
   wherein the containers are configured to be exchangeable; and/or
   wherein the container environment is configured to on-board or de-board containers.
item 8. The CPE unit according to any one of items 1 to 7,
   wherein the at least one CPE application provides at least one of CPE functionalities according to Layer 7 of the Open Systems Interconnect Model.
item 9. A method for operating a CPE unit according to any one of items 1 to 8 comprising the steps of:
   configuring the physical resources layer;
   hosting at least one container in the container environment;
   allocating for the at least one CPE application a respective defined subset of physical resources from the physical resources layer; and
   the application layer performing at least of one the following:
      sending data to the physical resources layer via the abstraction layer,
      receiving data from the physical resources layer via the application layer, and/or
      after receiving and/or before sending of data processing the data according to a predetermined CPE function.
item 10. A system for virtualized deployment of customer premise equipment comprising
   at least one CPE unit according to any one of items 1 to 8 and
   at least one distribution platform connected to the CPE unit via at least one network connection,
   wherein the distribution platform is configured to host a container registry, and
   wherein the CPE unit is configured to communicate with the distribution platform and to on-board and/or de-board of at least one container according to information received from the distribution platform.
item 11. The system of item 10,
   wherein the distribution platform is configured to provide an interface to a user for selecting at least one container to be instantiated on at least one of the CPE units;
   wherein the distribution platform is configured send the at least one selected container to the respective CPE unit from the container registry;
   wherein the abstraction layer of the respective CPE unit is configured to receive the at least one selected container from the distribution platform and to on-board the container according to the information received from the distribution platform; and
   wherein the user is one of the following:
      a user of the CPE accessing the distribution platform via the CPE,
      a user of the CPE accessing the distribution platform via a device and/or connection independent of the CPE, and/or
      a third party accessing the distribution platform.
item 12. A method of virtualized deployment of customer premise equipment with a system according to item 10 or 11 comprising the steps of:
   providing an interface to a user for selecting at least one container to be instantiated on at least one of the CPE units;
   sending the at least one selected container to the respective CPE unit from the container registry;
   receiving in the abstraction layer of the respective CPE unit the at least one selected container from the distribution platform;
   on-boarding the container according to the information received from the distribution platform; and
   wherein the user is one of the following:
      a user of the CPE accessing the distribution platform via the CPE,
      a user of the CPE accessing the distribution platform via a device and/or connection independent of the CPE, and/or
      a third party accessing the distribution platform.
item 13. Method of item 12 additionally comprising in at least one CPE unit the steps of:
   configuring the physical resources layer;
   hosting at least one container in the container environment;
   allocating for the at least one CPE application a respective defined subset of physical resources from the physical resources layer; and
   the application layer performing at least of the following:
      sending data to the physical resources layer via the abstraction layer,
      receiving data from the physical resources layer via the application layer, and/or after receiving and/or before sending of data processing the data according to a predetermined CPE function.

## Claims

1. A method for virtualized deployment of customer premise equipment with a system comprising at least one customer premise equipment, CPE, unit and at least one distribution platform connected to the CPE unit via at least one network connection, the method comprising the steps of:
providing an interface to a user for selecting at least one container to be instantiated on at least one of the CPE units;
sending the at least one selected container to the respective CPE unit from a container registry of the distribution platform;
receiving in an abstraction layer of the respective CPE unit the at least one selected container from the distribution platform;
on-boarding the container according to information received from the distribution platform; and
wherein the user is one of the following:
a user of the CPE accessing the distribution platform via the CPE,
a user of the CPE accessing the distribution platform via a device and/or connection independent of the CPE, and/or
a third party accessing the distribution platform.

2. Method according to claim 1 additionally comprising in at least one CPE unit the steps of:
configuring the physical resources layer and
allocating for the at least one CPE application a respective defined subset of physical resources from the physical resources layer; and
hosting at least one container in the container environment.

3. Method according to claim 1 or claim 2 additionally comprising in the application layer of the CPE unit performing at least of the following:
sending data to the physical resources layer via the abstraction layer,
receiving data from the physical resources layer via the application layer, and/or
after receiving and/or before sending of data processing the data according to a predetermined CPE function.

4. Method according to any one of claims 1 to 3,
wherein the distribution platform is operated by a network operator or and/or network provider.

5. Method according to any one of claims 1 to 4,
wherein in the operating system a Linux Container technology is used, which runs multiple isolated container-based Linux systems.

6. Method according to any one of claims 1 to 5,
wherein each container has a union-capable file system which is configured to enable the use of a single file system root-image for multiple containers; and
wherein the changes between the root image and the image of a certain container are stored in a separated union-layer.

7. Method according to claim 6,
wherein the root image is stored on the CPE unit in an exchangeable manner;
wherein to on-board a CPE application requires only a delta-image by referring to the single file system root image; and
wherein new CPE applications are on-boarded by requesting these union-images by the container registry.

8. Method according to any one of claims 1 to 7,
wherein the interface is a store being provided on a web-based GUI of the CPE unit and configured to receive a request for installation of an CPE application.

9. Method according to any one of claims 1 to 8,
wherein the interface is a customer portal preferably being provided on a website of a network operator or on an App on a mobile user device and configured to push a request for installation of an CPE application to the CPE unit.

10. A system for virtualized deployment of customer premise equipment for use in a method according to any one of claims 1 to 9 comprising
at least one CPE unit and
at least one distribution platform connected to the CPE unit via at least one network connection,
wherein the distribution platform is configured to host a container registry, and
wherein the CPE unit is configured to communicate with the distribution platform and to on-board and/or de-board of at least one container according to information received from the distribution platform.

11. The system of claim 10,
wherein the distribution platform is configured to provide an interface to a user for selecting at least one container to be instantiated on at least one of the CPE units;
wherein the distribution platform is configured send the at least one selected container to the respective CPE unit from the container registry;
wherein the abstraction layer of the respective CPE unit is configured to receive the at least one selected container from the distribution platform and to on-board the container according to the information received from the distribution platform; and
wherein the user is one of the following:
a user of the CPE accessing the distribution platform via the CPE,
a user of the CPE accessing the distribution platform via a device and/or connection independent of the CPE, and/or
a third party accessing the distribution platform.

12. A customer premise equipment, CPE, unit for use in a method according to any one of claims 1 to 9 or in a system according to claim 10 or 11 comprising:
a physical resources layer comprising reprogrammable hardware resources;
an abstraction layer, preferably comprising a container environment, configured to host at least one container, said container comprising at least one CPE application in an virtualized environment, wherein the abstraction layer is configured to allocate for the at least one CPE application a respective defined subset of physical resources from the physical resources layer; and
an application layer formed by the at least one CPE application configured for at least one of the following: sending data to the physical resources layer via the abstraction layer, receiving data from the physical resources layer via the application layer, and/or after receiving and/or before sending of data to processing the data according to a predetermined CPE function.

13. The CPE unit according to claim 12,
wherein the physical resources layer comprises at least one of the following units:
at least one software-defined-radio unit configured to provide dynamic radio resources for at least one predetermined frequency range, preferably comprising at least one configurable RF unit, wherein each configurable RF unit is configured to provide and/or receive raw sampled data to/from the abstraction and/or application layer, which is preferably independent of the used modulation protocols,
at least one programmable logic device unit, preferably a field-programmable gate array, and
at least one computational unit;
wherein the units of the physical resources layer are preferably formed from general purpose hardware; and
wherein preferably the at least one CPE application is configured to implement at least one radio service which provides, receives, and/or processes the raw sampled data according to at least one first protocol.

14. The CPE unit according to claim 13,
wherein the at least one first protocol can be reprogrammed to implement a new protocol and is preferably at least one of the following: a protocol according to the IEEE 802.11 specification, a GSM protocol, a WCDMA/UMTS protocol, a LTE protocol, a 5G protocol, or a IoT protocol; and/or
wherein the at least one software-defined-radio unit is configured to operate on a wide range of different bands, preferably on at least of one of the following frequency bands: the 433MHz frequency band, Gigabit-WiFi bands, 5G network band, DECT bands, bands reserved for cellular networks, ISM bands, bands of the LTE specification, and/or on an unlicensed frequency spectrum.

15. The CPE unit according to claims 13 or 14,
wherein the software-defined-radio unit communicates directly with the at least one programmable logic device unit and/or a other programmable logic device for processing of the raw sampled data.

16. The CPE unit according to any one of claims 12 to 15,
wherein the at least one programmable logic device unit is configured to provide an interface to an optical network and/or to a wired network; and/or
wherein at least one CPE application is configured to implement at least one communication service which provides, receives, and/or processes data from the programmable logic device unit according to at least one second protocol; and
wherein the at least one second protocol can be reprogrammed to implement a new protocol and is preferably a DSL or OTN protocol.

17. The CPE unit according to any one of claims 12 to 16,
wherein the containers are configured to be exchangeable; and/or
wherein the container environment is configured to on-board or de-board containers.

18. The CPE unit according to any one of claims 12 to 17,
wherein the at least one CPE application provides at least one of CPE functionalities according to Layer 7 of the Open Systems Interconnect Model.

19. A method for operating a CPE unit according to any one of claims 12 to 18 comprising the steps of:
configuring the physical resources layer;
hosting at least one container in the container environment;
allocating for the at least one CPE application a respective defined subset of physical resources from the physical resources layer; and
the application layer performing at least of one the following:
sending data to the physical resources layer via the abstraction layer,
receiving data from the physical resources layer via the application layer, and/or
after receiving and/or before sending of data processing the data according to a predetermined CPE function.
